Europäisches Patentamt

European Patent Office

Office européen des brevets

(19)

(11) Veröffentlichungsnummer: **0 284 551**
**A1**

## EUROPÄISCHE PATENTANMELDUNG

(12)

(21) Anmeldenummer: 88810114.4

(22) Anmeldetag: 25.02.88

(51) Int. Cl.⁴: **B 65 B 23/12**
B 65 G 17/32, A 21 C 15/00

(30) Priorität: 23.03.87 CH 1088/87

(43) Veröffentlichungstag der Anmeldung:
28.09.88 Patentblatt 88/39

(84) Benannte Vertragsstaaten:
CH DE FR GB IT LI NL

(71) Anmelder: SIG Schweizerische Industrie-Gesellschaft
CH-8212 Neuhausen am Rheinfall (CH)

(72) Erfinder: Fluck, René
Schlechtenbolweg 645
CH-8226 Schleitheim (CH)

(74) Vertreter: White, William et al
Isler AG Patentanwalts-Bureau Walchestrasse 23
CH-8006 Zürich (CH)

(54) Palette zum Halten und Manipulieren von Gruppen von Nahrungsmittelscheiben, insbesondere Biscuits.

(57) Die Palette (1) besteht aus einem quaderförmigen Rahmen (11) mit zwei einander gegenüberliegenden Stirnflächen (12). In mindestens einer der Seitenflächen (13) verläuft eine zylindrische oder prismatische Ausnehmung (17) parallel zur Längserstreckung des Rahmens (11). Die Ausnehmung ist gegen mindestens eine der übrigen Seitenflächen (15) offen. Mit dieser Palette können Gruppen von Biscuits (3) schonend manipuliert werden.

Fig. 1

EP 0 284 551 A1

Bundesdruckerei Berlin

# Beschreibung

## Palette zum Halten und Manipuleren von Gruppen von Nahrungsmittelscheiben, insbesondere Biscuits

Bei der Herstellung von Biscuits werden diese zwischen dem Backofen und der Verpackungsmaschine oft über weite Strecken transportiert, zwischengelagert, in Kolonnen geordnet, die Kolonnen aufgeteilt oder die Kolonnenzahl vermindert. Bei diesen Manipulationen sind insbesondere die Kanten der Biscuits gefährdet.

Der vorliegenden Erfindung liegt die Aufgabe zugrunde, eine schonende Manipulation der Scheiben zu ermöglichen. Diese Aufgabe wird durch die im Anspruch 1 definierte Palette gelöst.

Die erfindungsgemässe Palette wird zweckmässig unmittelbar nach dem Austritt der Biscuits aus dem Backofen mit der z.B. abgezählten Gruppe von Biscuits gefüllt. Die Biscuits sind dann bei ihrem Weitertransport und bei der Manipulation bis zur Verpackungsmaschine durch die Palette optimal geschützt. Damit kann die Ausschussrate erheblich gesenkt werden. Durch die Paletten kann zudem die Ausbildung von Weichen in Transportkolonnen vereinfacht werden. Durch die durchgehende Oeffnung zu einer der andern Seitenflächen wird verhindert, dass sich in der Ausnehmung Krümel ansammeln können. Die erfindungsgemässe Palette ermöglicht ausserdem eine einfache Umstellung auf andere Biscuitformen oder Gruppenlängen. Mit den gleichen äusseren Abmessungen können Paletten mit unterschiedlichen Ausnehmungen hergestellt werden, so dass bei der Umstellung nur die Paletten ausgetauscht werden müssen und an der Transporteinrichtung kaum Aenderungen nötig sind.

Nachfolgend wird ein Ausführungsbeispiel der Erfindung anhand der Zeichnung erläutert. Darin zeigt:

    Fig. 1 einen Querschnitt durch eine Palette,

    Fig. 2 eine Draufsicht auf die Palette gemäss Fig. 1,

    Fig. 3 einen Querschnitt durch eine zweite Ausführungsform,

    Fig. 4 die Palette nach Fig. 3 in anderer räumlicher Anordnung,

    Fig. 5 Fig. 6 und Fig. 7 Querschnitte durch drei weitere Ausführungsformen,

    Fig. 8 einen Querschnitt durch eine siebte Ausführungsform, und

    Fig. 9 enen Längsschnitt längs der Linie IX - IX in Fig. 8.

Alle dargestellten Paletten 1 bestehen aus einem quaderförmigen Rahmen 11, 31, 51, 61, 71, 81 aus Kunststoff mit einander gegenüberliegenden, durchgehenden Stirnflächen 12, 32, 52, 62, 72, 82 und je vier Seitenflächen 13-16, 33-36, 53-56, 63-66, 73-76, 83-86.

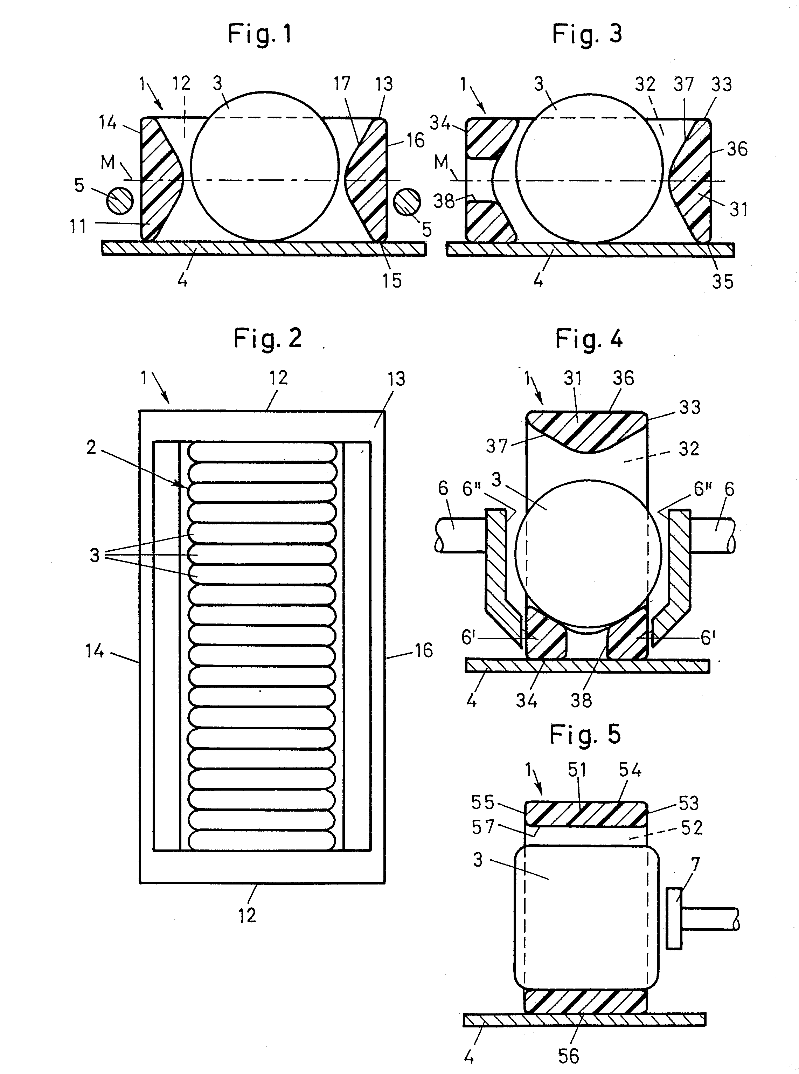

Bei der Ausführungsform nach Fig. 1 und 2 erstreckt sich eine prismatische Ausnehmung 17 parallel zur Längserstreckung des Rahmens 11 quer von der Seitenfläche 13 zur Seitenfläche 15. Die Ausnehmung 17 ist symmetrisch zur Mittelebene M zwischen diesen Seitenflächen 13, 15 und gegen die Mittelebene M etwas verengt. In der Ausnehmung 17 ist eine abgezählte oder abgemessene Gruppe 2 von Biscuits 3 lose gehalten. Der Rahmen 11 und die Biscuits 3 liegen auf einem Förderband 4 auf. Der Rahmen 11 ist an den beiden Seitenflächen 14, 16 z.B. mittels Stangen 5 geführt.

Bei der Ausführungsform nach Fig. 3 ist die Ausnehmung 37 auf der Seite der Seitenfläche 34 konkav. Ueber die ganze Länge der Ausnehmung 37 erstreckt sich eine Oeffnung 38 von der Ausnehmung 37 zur Seitenfläche 34. Diese Ausführungsform ist für runde Biscuits 3 gedacht und eignet sich auch zum Transport des Rahmens 31 auf der Seitenfläche 34 (Fig. 4). Der Rahmen 31 liegt auf einem Förderband 4 auf und wird durch Führungsbleche 6 mit Führungsfläche 6' geführt, wobei der obere Teil 6" die Biscuits seitlich sichert. Durch die Oeffnung 38 wird verhindert, dass sich bei der Transportlage nach Fig. 4 Krümel am Grund der Ausnehmung 37 ansammeln können.

Bei der Ausführungsform nach Fig. 5 hat die Ausnehmung 57 zueinander und zu den Seitenflächen 54, 56 parallele Wände. Dieser Rahmen 51 ist für den Transport rechteckiger Biscuits 3 geeignet. Diese können an einer Entladestation z.B. mit einem Stössel 7 ausgestossen werden.

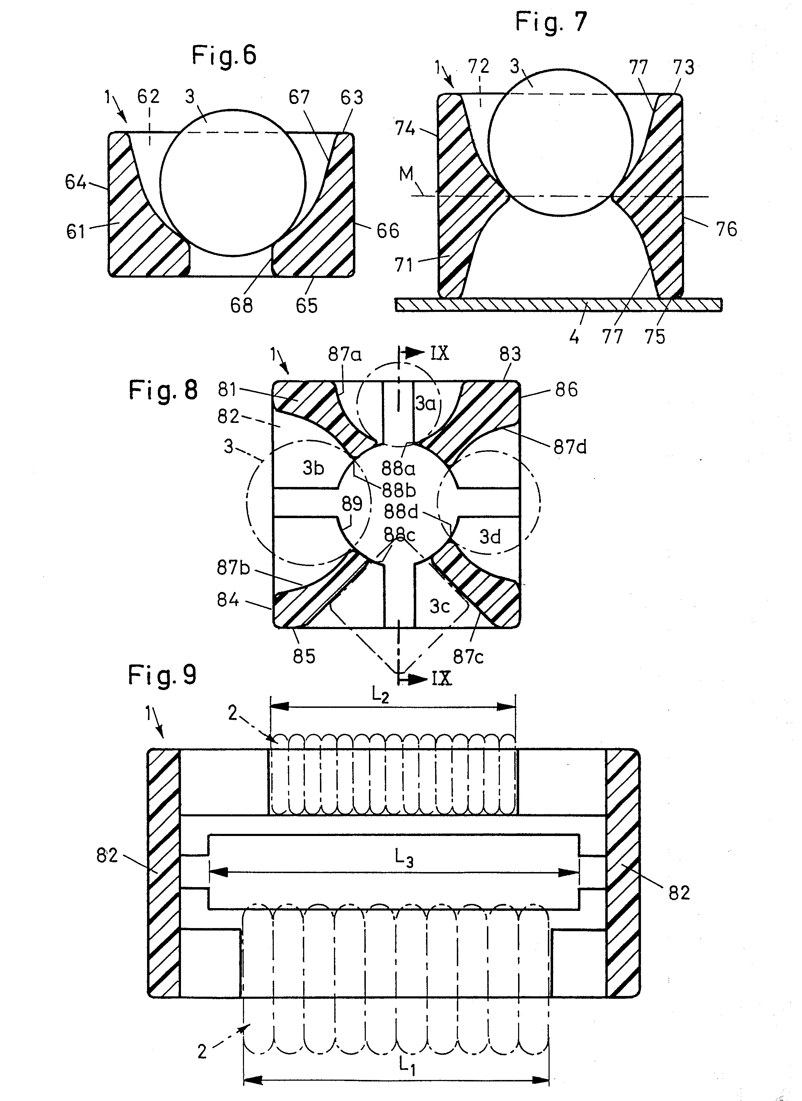

Bei der Ausführungsform nach Fig. 6 hat die Ausnehmung 67 einen halbrunden Querschnitt zur Aufnahme runder Biscuits 3. Die Ausnehmung 67 kommuniziert über eine durchgehende Oeffnung 68 mit der Seitenfläche 65.

Die Ausführungsform nach Fig. 7 ist analog jener nach Fig. 6, nur dass die Ausnehmung 77 spiegelbildlich zur Mittelebene M ausgebildet ist. Dadurch wird das Orientieren des Rahmens 71 vor dem Beladen mit den Biscuits 3 vereinfacht.

Bei der Palette 1 nach Fig. 8 und 9 hat der Rahmen 81 einen quadratischen Querschnitt und in allen vier Seitenflächen 83, 84, 85, 86 unterschiedlich geformte Ausnehmungen 87a, 87b, 87c, 87d für unterschiedlich geformte Biscuits 3a, 3b, 3c, 3d und/oder unterschiedliche Gruppenlängen $L_1$, $L_2$, $L_3$. Alle Ausnehmungen sind über Oeffnungen 88a, 88b, 88c, 88d mit ener zentralen Bohrung 89 verbunden, damit sich in den Ausnehmungen keine Krümel ansammeln.

## Patentansprüche

1. Palette zum Halten und Manipulieren einer abgemessenen Gruppe (2) flachseitig aneinander liegender Nahrungsmittelscheiben (3), insbesondere Biscuits, bestehend aus einem quaderförmigen Rahmen (11,31,51,61,71,81) mit zwei einander gegenüberliegenden Stirnflächen (12,32,52,62,72,82), mit einer parallel zur Längserstreckung des Rahmens (11,31,51,61,71,81) verlaufenden zylindrischen oder prismatischen Ausnehmung in mindestens einer der Seitenflächen (13,33,53,63,73,83) des Rahmens zur losen Aufnahme der Gruppe (2), wobei diese Ausnehmung mit einer über die ganze Länge der Ausnehmung durchgehenden Oeffnung zu mindestens einer weiteren der Seitenflächen (15,35,55,65,75,85) kommuniziert.

2. Palette nach Anspruch 1, dadurch gekennzeichnet, dass sich die zylindrische oder prismatische Ausnehmung (17,37,57,67,77) durchgehend von der einen Seitenfläche (13,33,53,63,73) zur gegenüberliegenden Seitenfläche (15,35,55,65,75) erstreckt.

3. Palette nach Anspruch 2, dadurch gekennzeichnet, dass die Ausnehmung (17,37,57,77) spiegelbildlich zur Mittelebene (M) der beiden gegenüberliegenden Seitenflächen ausgebildet ist.

4. Palette nach Anspruch 3, dadurch gekennzeichnet, dass die Ausnehmung (37) längs mindestens einer der beiden weiteren Seitenflächen (34) konkav ist und symmetrisch zur Mittelebene (M) die Oeffnung (38) zu dieser weiteren Seitenfläche (34) hat.

5. Palette nach Anspruch 3, dadurch gekennzeichnet, dass die Ausnehmung (17,77) in dem zu den Stirnflächen (12,72) parallelen Querschnitt gegen die Mittelebene (M) verengt ist.

6. Palette nach Anspruch 1, dadurch gekennzeichnet, dass jede der vier Seitenflächen (83,84,85,86) je eine der Ausnehmungen (87a,87b,87c,87d) aufweist, dass alle Ausnehmungen über ihre ganze Länge miteinander kommunizieren und im Querschnitt nach innen verengt sind, und dass der Querschnitt und/oder die Länge der vier Ausnehmungen unterschiedlich sind zur Aufnahme unterschiedlich geformter Scheiben (3) bzw. unterschiedlich langer Gruppen (2).

7. Palette nach einem der Ansprüche 1 bis 6, dadurch gekennzeichnet, dass sie aus Kunststoff besteht.

0284551

Fig. 1

Fig. 3

Fig. 2

Fig. 4

Fig. 5

0284551

Fig. 7

Fig. 6

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 826 576  (SOMIC SONDERMASCHINEN FÜR INNERBETRIEBLICHEN TRANSPORT) * Ansprüche 1-6, 11; Seite 7, Zeile 1 - Seite 8, Zeile 13; Figur 2 * --- | 1,2,7 | B 65 B  23/12 B 65 G  17/32 A 21 C  15/00 |
| A | DE-A-2 337 720  (SCHERER) * Seite 1, Zeile 4 - Seite 2, Zeile 16; Seite 9, Zeilen 12-16; Figur 1 * ----- | 1 | |

RECHERCHIERTE SACHGEBIETE (Int. Cl.4)

A 21 C  15/00
B 65 B  23/00
B 65 D  19/00
B 65 G  17/00

Der vorliegende Recherchenbericht wurde für alle Patentansprüche erstellt

| Recherchenort | Abschlußdatum der Recherche | Prüfer |
|---|---|---|
| BERLIN | 23-06-1988 | SIMON J J P |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
  Dokument